(19) Europäisches Patentamt
European Patent Office
Office européen des brevets

(11) **EP 4 317 296 B1**

(12) **EUROPEAN PATENT SPECIFICATION**

(45) Date of publication and mention of the grant of the patent:
**04.06.2025 Bulletin 2025/23**

(21) Application number: **22876207.6**

(22) Date of filing: **27.09.2022**

(51) International Patent Classification (IPC):
***C08L 21/00*** *(2006.01)* ***C08K 3/04*** *(2006.01)*
***C08K 3/36*** *(2006.01)* ***C08K 5/25*** *(2006.01)*
***C08K 5/548*** *(2006.01)* ***F16F 1/36*** *(2006.01)*

(52) Cooperative Patent Classification (CPC):
(C-Sets available)
**C08K 3/36; C08K 3/04; C08K 5/25;**
C08K 2201/006; F16F 1/3605 (Cont.)

(86) International application number:
**PCT/JP2022/035894**

(87) International publication number:
**WO 2023/054341 (06.04.2023 Gazette 2023/14)**

# (54) VIBRATION ISOLATION RUBBER COMPOSITION AND VIBRATION ISOLATION RUBBER MEMBER

SCHWINGUNGSOLIERENDE KAUTSCHUKZUSAMMENSETZUNG UND SCHWINGUNGSISOLIERENDES KAUTSCHUKELEMENT

COMPOSITION DE CAOUTCHOUC POUR L'ISOLATION DES VIBRATIONS ET ÉLÉMENT DE CAOUTCHOUC POUR L'ISOLATION DES VIBRATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 JP 2021161907**

(43) Date of publication of application:
**07.02.2024 Bulletin 2024/06**

(73) Proprietor: **Sumitomo Riko Company Limited**
**Komaki-shi, Aichi 485-8550 (JP)**

(72) Inventors:
- **ITATSU, Fumitomo**
  **Komaki-shi, Aichi 485-8550 (JP)**
- **YASUI, Kaoru**
  **Komaki-shi, Aichi 485-8550 (JP)**

(74) Representative: **Müller-Boré & Partner Patentanwälte PartG mbB**
**Friedenheimer Brücke 21**
**80639 München (DE)**

(56) References cited:
**WO-A1-2020/066550**
**JP-A- 2009 256 576**
**JP-A- 2011 162 720**
**JP-A- 2015 224 279**
**JP-A- 2017 155 174**
**JP-A- 2020 164 634**
**JP-B2- 6 408 905**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 7/00;**
**C08K 3/36, C08L 7/00;**
**C08K 5/25, C08L 7/00;**
**C08K 5/548, C08L 7/00;**
**C08K 13/02, C08L 7/00**

## Description

BACKGROUND

[Technical Field]

The present invention relates to a vibration isolation rubber composition and a vibration isolation rubber member that are used for vibration isolation applications in vehicles such as railroad vehicles.

[Related Art]

Examples of functions that are required for vibration isolation rubber for railroad vehicles include high durability, suppression of spring deterioration occurring during running excitation (low spring deterioration), and insulation properties.

Normally, aside from a polymer such as a diene-based rubber, a filler such as silica or carbon black is blended into a rubber composition that serves as a material of vibration isolation rubber. Here, vibration isolation rubber for which silica is used as the filler has properties of being excellent in terms of durability and insulation properties, but being incapable of satisfying low spring deterioration. On the other hand, vibration isolation rubber for which carbon black is used as the filler has properties of being capable of satisfying low spring deterioration, but becoming disadvantageous in terms of durability and insulation properties.

As described above, regarding the blending of the filler into vibration isolation rubber compositions, when silica is blended in singly or carbon black is blended in singly, it is difficult to satisfy all of high durability, low spring deterioration, and insulation properties.

In addition, conventionally, a blend of silica and carbon black has been used as appropriate as the filler for vibration isolation rubber compositions (for example, refer to Patent Literature 1-6). JP2020164634A and WO2020/066550A1 disclose further vibration isolation rubber compositions for applications in vehicles and which comprise carbon black and silica.

[Citation List]

[Patent Literature]

[Patent Literature 1]
Japanese Patent Laid-Open No. 2017-119873
[Patent Literature 2]
Japanese Unexamined Patent Application, First Publication No. 2015-224279
[Patent Literature 3]
Japanese Unexamined Patent Application, First Publication No. 2018-95810
[Patent Literature 4]
Japanese Unexamined Patent Application, First Publication No. 2016-124880
[Patent Literature 5]
Japanese Patent No. 6657491
[Patent Literature 6]
PCT International Publication No. WO 2015/182349

SUMMARY

[Technical Problem]

However, the objectives of the variety of vibration isolation rubber compositions described in the above-described patent literature are not to satisfy all of the functions (high durability, low spring deterioration, and insulation properties) that are required for vibration isolation rubber for railroad vehicles, and the rubber compositions are actually not capable of attaining the above-described objective.

That is, even in vibration isolation rubber compositions for which a blend of silica and carbon black is used, the above-described high durability, low spring deterioration, and insulation properties are trade-off properties, and thus, at the moment, it is difficult even for persons skilled in the art to sufficiently satisfy all of these functions. Therefore, there is still

room for improvement regarding this point.

The present disclosure has been made in consideration of the above-described circumstances and provides a vibration isolation rubber composition and a vibration isolation rubber member that are capable of satisfying all of high durability, low spring deterioration, and insulation properties at a high level.

[Solution to Problem]

The present inventors repeated studies mainly about reasons making it impossible to solve the above-described problem even in a case where silica and carbon black are jointly used as a filler with respect to a diene-based rubber, which is a polymer of vibration isolation rubber compositions. In the process of the studies, knowledge was obtained that silica has a property of easily aggregating, and it becomes easy for clumps to become loose when vibration isolation rubber is excited, which prevents low spring deterioration from being satisfied; carbon black has a poor chemical bond in the interface with rubber and is likely to act as a starting point of cracks, which causes deterioration of the durability of vibration isolation rubber; furthermore, carbon black is likely to form a conduction path, which causes deterioration of the insulation properties of vibration isolation rubber. In addition, it was found that these problems cannot be solved by the joint use of silica and carbon black as described above.

Therefore, the present inventors recalled that carbon black having a small specific surface area (exhibiting a specific BET specific surface area) is used as the carbon black and, furthermore, a dihydrazide compound is added to improve the dispersibility of the carbon black and silica. In addition, as a result of a variety of experiments, surprisingly, it was found that, when the amounts of a variety of materials described above are set within specific ranges regulated in the present invention, it becomes possible to satisfy all of the functions (high durability, low spring deterioration, and insulation properties) required for vibration isolation rubber for railroad vehicles.

The present invention relates to a vibration isolation rubber composition as defined in claims 1-4 and to a vibration isolation member as defined in claims 5 and 6.

[Advantageous Effects of Invention]

As described above, the vibration isolation rubber composition of the present invention contains a polymer composed of a diene-based rubber, a dihydrazide compound, carbon black having a BET specific surface area within a specific range, and silica, and the amounts thereof are within specific ranges. Therefore, it becomes possible to satisfy high durability, low spring deterioration, and insulation properties at a high level. This makes it possible for the vibration isolation rubber composition to exhibit excellent performance particularly as a material for vibration isolation rubber for railroad vehicles.

DESCRIPTION OF EMBODIMENTS

Next, an embodiment of the present invention will be described in detail.

A vibration isolation rubber composition that is an embodiment of the present invention (hereinafter, referred to as "the present vibration isolation rubber composition") is a vibration isolation rubber composition containing a polymer component composed of the following component (A) and the following components (B)-(D), in which amounts of the component (B), the component (C), and the component (D) are 0.1-5 parts by mass, 10-40 parts by mass, and 10-30 parts by mass, respectively, per 100 parts by mass of the component (A), and the component (C) has a BET specific surface area of 18-40 $m^2/g$.

(A) A diene-based rubber.
(B) A dihydrazide compound.
(C) Carbon black.
(D) Silica.

Hereinafter, configuration materials of the present vibration isolation rubber composition will be described in detail.

[Diene-based rubber (A)]

As described above, in the present vibration isolation rubber composition, a polymer composed of a diene-based rubber (A) is used, and polymers other than the diene-based rubber (A) are not used. As the diene-based rubber (A), a diene-based rubber containing natural rubber (NR) as a main component is preferably used. Here, the "main component" indicates that 50% by mass or more of the diene-based rubber (A) is natural rubber and generally means that the diene-based rubber (A) may be composed of natural rubber alone. Natural rubber is contained as the main component as described above, which makes the diene-based rubber excellent in terms of strength and reduction in the dynamic magnification factor.

In addition, examples of diene-based rubbers other than natural rubber include butadiene rubber (BR), styrene-butadiene rubber (SBR), chloroprene rubber (CR), isoprene rubber (IR), acrylonitrile-butadiene rubber (NBR), ethylene-propylene-diene rubber (EPDM), butyl rubber (IIR), chloroprene rubber (CR), and the like. These may be singly used or two or more may be jointly used. These diene-based rubbers are desirably used jointly with natural rubber.

[Dihydrazide compound (B)]

The present vibration isolation rubber composition contains a dihydrazide compound (B) in a specific amount as described previously. Examples of the dihydrazide compound (B) include compounds represented by the following general formula (1).

[Chem. 1]

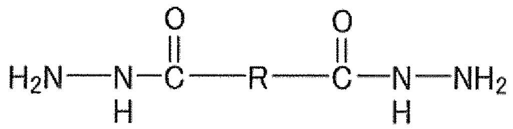

······(1)

[In the general formula (1), R represents an alkylene group having 1 to 30 carbon atoms, a cycloalkylene group having 1 to 30 carbon atoms, or a phenylene group.]

Specific examples of the dihydrazide compound (B) include adipic acid dihydrazide, isophthalic dihydrazide, phthalic acid dihydrazide, terephthalic acid dihydrazide, succinic acid dihydrazide, azelaic acid dihydrazide, sebacic acid dihydrazide, oxalic acid dihydrazide, dodecanoic acid dihydrazide, and the like. These may be singly used or two or more may be jointly used. Among them, from the viewpoint of reduction in the dynamic magnification factor, adipic acid dihydrazide and isophthalic dihydrazide are preferable.

The content of the dihydrazide compound (B) is 0.1-5 parts by mass per 100 parts by mass of the diene-based rubber (A) as described previously from the viewpoint of obtaining the action and effect of the present invention (satisfying all of high durability, low spring deterioration, and insulation properties at a high level) and preferably 0.5-4 parts by mass and more preferably 0.75-3 parts by mass from the same viewpoint.

[Carbon black (C)]

In addition, the present vibration isolation rubber composition contains a carbon black (C) in a specific amount as described previously. As the carbon black (C), carbon black having a BET specific surface area of 18-40 $m^2/g$ is used. Carbon black having a BET specific surface area of 18-35 $m^2/g$ is preferably used, and carbon black having a BET specific surface area of 18-30 $m^2/g$ is more preferably used.

This is because, when the BET specific surface area of the carbon black (C) is too large, a desired insulation effect cannot be obtained, and, when the BET specific surface area is too small, there is a problem of deterioration of the durability.

The BET specific surface area of the carbon black (C) can be measured, for example, using a gas mixture ($N_2$: 70% and He: 30%) as an adsorption gas and a BET specific surface area measuring instrument (manufactured by Microdata Co., Ltd., 4232-II) after degassing a specimen at 200°C for 15 minutes.

Regarding the grade of the carbon black (C), a variety of grades of carbon black such as the FEF grade, the MAF grade, the GPF grade, the SRF grade, the FT grade, and the MT grade can be used from the viewpoint of reinforcement properties, durability or insulation properties. These may be singly used or two or more may be jointly used. Among them, FEF-grade carbon black is preferably used from the above-described viewpoint.

The content of the carbon black (C) is 10-40 parts by mass per 100 parts by mass of the diene-based rubber (A) as described previously from the viewpoint of obtaining the action and effect of the present invention (satisfying all of high durability, low spring deterioration, and insulation properties at a high level) and preferably 20-40 parts by mass and more preferably 30-40 parts by mass from the same viewpoint.

[Silica (D)]

In addition, the present vibration isolation rubber composition contains silica (D) in a specific amount as

described previously. As the silica (D), for example, wet silica, dry silica, colloidal silica, or the like can be used. In addition, these may be singly used or two or more may be jointly used.

In addition, the BET specific surface area of the silica (D) is preferably 20-380 $m^2/g$, silica having a BET specific surface area of 30-330 $m^2/g$ is more preferable from the viewpoint of satisfying both high durability and low spring deterioration.

The BET specific surface area of the silica (D) can be measured, for example, using a gas mixture ($N_2$: 70% and He: 30%) as an adsorption gas and a BET specific surface area measuring instrument (manufactured by Microdata Co., Ltd., 4232-II) after degassing a specimen at 200°C for 15 minutes.

The content of silica (D) is 10-30 parts by mass per 100 parts by mass of the diene-based rubber (A) as described previously from the viewpoint of obtaining the action and effect of the present invention (satisfying all of high durability, low spring deterioration, and insulation properties at a high level) and preferably 15-30 parts by mass and more preferably 20-30 parts by mass from the same viewpoint.

[Silane coupling agent (E)]

The present vibration isolation rubber composition may contain a silane coupling agent (E) as necessary. When the silane coupling agent (E) is contained as described above, the silica (D) and the diene-based rubber (A) bond to each other through the silane coupling agent (E), and it becomes possible to further improve the durability of vibration isolation rubber.

Examples of the silane coupling agent (E) include mercapto-based silane coupling agents, sulfide-based silane coupling agents, amine-based silane coupling agents, epoxy-based silane coupling agents, vinyl-based silane coupling agents, and the like, and these may be singly used or two or more may be jointly used. Among them, when the silane coupling agent (E) is a mercapto-based silane coupling agent or a sulfide-based silane coupling agent, the vulcanization density increases, and the addition of the silane coupling agent becomes particularly effective for a low dynamic magnification factor and durability, which is preferable.

Examples of the mercapto-based silane coupling agents include 3-mercaptopropyltrimethoxysilane, 3-mercaptopropyltriethoxysilane, and the like. These may be singly used or two or more may be jointly used.

Examples of the sulfide-based silane coupling agents include bis-(3-(triethoxysilyl)-propyl)-disulfide, bis(3-triethoxysilylpropyl)trisulfide, bis-(3-(triethoxysilyl)-propyl)-tetrasulfide, bis(3-trimethoxysilylpropyl)disulfide, bis(2-triethoxysilylethyl)tetrasulfide, bis(2-trimethoxysilylethyl)tetrasulfide, bis(3-triethoxysilylpropyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoletetrasulfide, 3-triethoxysilylpropylmethacrylate monosulfide, 3-trimethoxysilylpropylmethacrylate monosulfide, and the like. These may be singly used or two or more may be jointly used.

Examples of the amine-based silane coupling agents include 3-aminopropyltriethoxysilane, 3-aminopropyltrimethoxysilane, N-(2-aminoethyl)-3-aminopropyltrimethoxysilane, N-(2-aminoethyl)-3-aminopropylmethyldimethoxysilane, 3-(N-phenyl)aminopropyltrimethoxysilane, and the like. These may be singly used or two or more may be jointly used.

Examples of the epoxy-based silane coupling agents include 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, 3-glycidoxypropylmethyldimethoxysilane, and the like. These may be singly used or two or more may be jointly used.

Examples of the vinyl-based silane coupling agents include vinyltriethoxysilane, vinyltrimethoxysilane, vinyltris(β-methoxyethoxy)silane, vinyldimethylchlorosilane, vinyltrichlorosilane, vinyltriisopropoxysilane, vinyltris(2-methoxyethoxy)silane, and the like. These may be singly used or two or more may be jointly used.

The content of the silane coupling agent (E) is preferably 0.1-10 parts by mass and more preferably within a range of 0.3-8 parts by mass per 100 parts by mass of the diene-based rubber (A) since the silane coupling agent is excellent in terms of a low dynamic magnification factor, durability, and the like.

The present vibration isolation rubber composition may also appropriately contain the component (E) or a vulcanizing agent, a vulcanization accelerator, a vulcanization assistant, an anti-aging agent, a process oil, or the like as necessary together with the components (A)-(D), which are the essential components.

Examples of the vulcanizing agent include sulfur (powdered sulfur, precipitated sulfur, and insoluble sulfur), sulfur-containing compounds such as alkyl phenol disulfide, and the like. These may be singly used or two or more may be jointly used.

**In** addition, the content of the vulcanizing agent is preferably within a range of 0.1-10 parts by mass and particularly preferably within a range of 0.3-5 parts by mass with respect to 100 parts by mass of the diene-based rubber (A). This is because, when the content of the vulcanizing agent is too small, a tendency for the vulcanization responsiveness to become poor is shown, and, conversely, when the content of the vulcanizing agent is too large, a tendency for

the physical properties (breaking strength and elongation at breaking) of rubber to deteriorate is shown.

Examples of the vulcanization accelerator include thiuram-based vulcanization accelerators, sulfenamide-based vulcanization accelerators, guanidine-based vulcanization accelerators, thiazole-based vulcanization accelerators, aldehyde ammonia-based vulcanization accelerators, aldehyde amine-based vulcanization accelerators, thiourea-based vulcanization accelerators, and the like. These may be singly used or two or more may be jointly used. Among these, a combination of a thiuram-based vulcanization accelerator and at least one vulcanization accelerator selected from a sulfenamide-based vulcanization accelerator, a guanidine-based vulcanization accelerator, and a thiazole-based vulcanization accelerator is preferable since the present vibration isolation rubber composition becomes excellent in terms of compression set.

In addition, the content of the vulcanization accelerator is preferably within a range of 0.1-10 parts by mass and particularly preferably within a range of 0.3-5 parts by mass with respect to 100 parts by mass of the diene-based rubber (A).

Examples of the thiourea-based vulcanization accelerators include tetramethylthiuram disulfide (TMTD), tetraethylthiuram disulfide (TETD), tetrabutylthiuram disulfide (TBTD), tetrakis(2-ethylhexyl)thiuram disulfide (TOT), tetrabenzylthiuram disulfide (TBzTD), and the like. These may be singly used or two or more may be jointly used.

Examples of the sulfenamide-based vulcanization accelerators include N-oxydiethylene-2-benzothiazole sulfenamide (NOBS), N-cyclohexyl-2-benzothiazole sulfenamide (CBS), N-t-butyl-2-benzothiazole sulfenamide (BBS), N,N'-dicyclohexyl-2-benzothiazole sulfenamide, and the like. These may be singly used or two or more may be jointly used.

Examples of the guanidine-based vulcanization accelerator include N,N'-diphenylthiourea, trimethylthiourea, N,N'-diethylthiourea, N,N'-dibutylthiourea, and the like. These may be singly used or two or more may be jointly used.

Examples of the thiazole-based vulcanization accelerators include dibenzothiazyl disulfide (MBTS), 2-mercaptobenzothiazole (MBT), sodium 2-mercaptobenzothiazole (NaMBT), zinc 2-mercaptobenzothiazole (ZnMBT), and the like. These may be singly used or two or more may be jointly used. Among these, dibenzothiazyl disulfide (MBTS) and 2-mercaptobenzothiazole (MBT) are suitably used since, particularly, the vulcanization responsiveness is excellent.

Examples of the vulcanization assistant include zinc oxide (ZnO), stearic acid, magnesium oxide, and the like. These may be singly used or two or more may be jointly used.

In addition, the content of the vulcanization assistant is preferably within a range of 0.1-10 parts by mass and particularly preferably within a range of 0.3-7 parts by mass with respect to 100 parts by mass of the diene-based rubber (A).

Examples of the anti-aging agent include carbamate-based anti-aging agents, phenylenediamine-based anti-aging agents, phenolic anti-aging agents, diphenylamine-based anti-aging agents, quinoline-based anti-aging agents, imidazole-based anti-aging agents, waxes, and the like. These may be singly used or two or more may be jointly used.

**In** addition, the content of the anti-aging agent is preferably within a range of 0.5-15 parts by mass and particularly preferably within a range of 1-10 parts by mass with respect to 100 parts by mass of the diene-based rubber (A).

Examples of the process oil include naphthenic oil, paraffin-based oil, aroma-based oil, and the like. These may be singly used or two or more may be jointly used.

**In** addition, the content of the process oil is preferably within a range of 1-35 parts by mass and particularly preferably within a range of 3-30 parts by mass with respect to 100 parts by mass of the diene-based rubber (A).

[Method for preparing vibration isolation rubber composition]

Here, the present vibration isolation rubber composition can be prepared using the components (A)-(D), which are the essential components, in specific amounts and further using the component (E) or other materials listed above as necessary by kneading them using a kneading machine such as a kneader, a Banbury mixer, an open roll, or a twin-screw agitator.

Particularly, the materials are desirably kneaded by kneading the materials other than the vulcanizing agent and the vulcanization accelerator using a Banbury mixer at 100°C-170°C for three to 10 minutes (preferably kneading at 120°C-150°C for 3-5 minutes), then, blending the vulcanizing agent and the vulcanization accelerator in, and kneading the materials using an open roll at 30°C-80°C for 3-10 minutes (preferably kneading at 30°C-60°C for 3-5 minutes).

In addition, it is preferable to make the present vibration isolation rubber composition thus obtained satisfy the following condition ($\alpha$) from the viewpoint of obtaining the action and effect of the present invention (satisfying all of high durability, low spring deterioration, and insulation properties at a high level).

($\alpha$) $\Delta G'$ indicated by the following formula (I) is 5.0 or less.

$$\Delta G' = G'1/G'2 \quad \ldots\ldots \quad (I)$$

[In the formula (I), G'1 represents the storage modulus of a unvulcanized rubber composition at a frequency of 11 Hz, a deflection angle of 0.28%, and 40°C, and G'2 represents the storage modulus of the unvulcanized rubber composition at a frequency of 11 Hz, a deflection angle of 42%, and 40°C.]

In addition, ΔG' is preferably 4.5 or less from the viewpoint of favorably obtaining the action and effect of the present invention.

ΔG' indicated by the formula (I) serves as an index for evaluating the aggregation property of a filler so as to conform to the description of Japanese Patent Laid-Open No. 2006-47070, and the smaller ΔG', the higher the degree of dispersion of the filler. In addition, G'1 and G'2 can be measured, for example, with a rubber processing tester or CURELASTOMETER or by dynamic mechanical analysis or the like. More specifically, G'1 and G'2 are measured with RPA2000 manufactured by Alpha Technology Co., Ltd.

In addition, the present vibration isolation rubber composition is vulcanized at a high temperature (150°C-170°C) for five to 30 minutes and thereby becomes a vibration isolation rubber member (vulcanized body).

The hardness (JIS-A hardness) of the surface of the vibration isolation rubber member (vulcanized body) is normally 60-85 and preferably 65-80. The hardness can be measured with ASKER Durometer (P1-A type) manufactured by Kobunshi Keiki Co., Ltd.

In addition, the vibration isolation rubber member (vulcanized body) is capable of reaching 80,000 or more in terms of the number of times of expansion and contraction at break in an expansion and stretching fatigue test performed according to JIS K 6260. The number of times of expansion and contraction at break reached by the vibration isolation rubber member is preferably approximately 100,000 or more and more preferably 120,000 or more.

Furthermore, the vibration isolation rubber member (vulcanized body) is capable of reaching $1 \times 10^9$ Ω·cm or more in terms of volume resistivity that is measured under the following conditions according to JIS K 6271-1: 2015 (Rubber, vulcanized or thermoplastic-Determination of resistivity). The volume resistivity reached by the vibration isolation rubber member is preferably $1 \times 10^{11}$ Ω·cm or more and more preferably $1 \times 10^{13}$ Ω·cm or more.

Measurement method: Guarded-electrode system
Cathode electrode: Outer diameter 80 mm, inner diameter 70 mm
Main electrode: 50 mm
Specimen external dimensions: 100 mm × 100 mm
Sample thickness: 2 mm
Applied voltage: 1 V
Detection current range: 200 pA to 20 mA

In addition, the vibration isolation rubber member (vulcanized body) is capable of reacting -20% or more in terms of the value of spring deterioration indicated by the following formula (II) that is obtained by performing an endurance fatigue test in which the vibration isolation rubber member is contracted 4 mm in a compression direction and extended 15 mm in a tensile direction repeatedly at a frequency of 3 Hz and measuring the loads when the vibration isolation rubber member is extended 15 mm in the tensile direction (an initial load F1 and a load F2 when the number of times of extension and contraction reaches 3,000). The value of spring deterioration reached by the vibration isolation rubber member is preferably -18% or more and more preferably -16% or more.

$$\text{Spring deterioration} = \{(F2 - F1)/F1\} \times 100\ (\%) \quad \ldots\ldots \quad (II)$$

As described above, the vibration isolation rubber member composed of the vulcanized body of the present vibration isolation rubber composition enables all of high durability, low spring deterioration, and insulation properties to be satisfied at a high level and is thus capable of exhibiting excellent performance particularly as a material of vibration isolation rubber for railroad vehicles.

In addition, the vibration isolation rubber member can also be used as configuration members such as engine mounts, stabilizer bushes, suspension bushes, motor mounts, subframe mounts, and the like that are used for the vehicles of automobiles or the like aside from the above-described application. Particularly, due to the high insulation properties or the like, the vibration isolation rubber member can also be advantageously used in the applications of configuration members (vibration isolation rubber members for electric vehicles) such as motor mounts, suspension bushes, and subframe mounts for electric vehicles including an electric motor as a power source (not only electric vehicles (EVs) but also fuel cell vehicles (FCVs), plug-in hybrid vehicles (PHVs), hybrid vehicles (HVs), and the like).

In addition, due to the high insulation properties or the like, the vibration isolation rubber member can also be used in the applications of vibration control apparatuses and seismic isolation apparatuses such as vibration control dampers for computer hard disks, vibration control dampers for general household appliances such as washing machines, vibration control walls for buildings in the construction and housing field, and vibration control dampers.

Examples

Next, examples will be described together with comparative examples. However, the present invention is not limited to these examples.

First, prior to the examples and the comparative examples, the following materials were prepared. Each measurement value for carbon black and silica is a value measured according to the above-described method.

[Natural rubber (NR)]

[Dihydrazide (i)]

Manufactured by Otsuka Chemical Co., Ltd., adipic acid dihydrazide (ADH)

[Dihydrazide (ii)]

Manufactured by Otsuka Chemical Co., Ltd., isophthalic dihydrazide (IDH)

[Carbon black (i)]

Manufactured by Tokai Carbon Co., Ltd., SEAST V (BET specific surface area: 27 $m^2/g$)

[Carbon black (ii)]

Manufactured by Asahi Carbon Co., Ltd., ASAHI #60 (BET specific surface area: 40 $m^2/g$)

[Carbon black (iii)]

Manufactured by Tokai Carbon Co., Ltd., SEAST SRA (BET specific surface area: 18 $m^2/g$)

[Carbon black (iv)]

Manufactured by Cabot Corporation, SHOWA BLACK N330 (BET specific surface area: 75 $m^2/g$)

[Carbon black (v)]

Manufactured by Asahi Carbon Co., Ltd., ASAHI #15 (BET specific surface area: 12 $m^2/g$)

[Carbon black (vi)]

Manufactured by Asahi Carbon Co., Ltd., ASAHI #65 (BET specific surface area: 42 $m^2/g$)

[Silica]

Manufactured by Tosoh Silica Corporation, NIPSIL VN3 (BET specific surface area: 180-230 $m^2/g$)

[Silane coupling agent (i)]

Sulfide-based silane coupling agent (manufactured by Evonik Industries AG, Si-69)

[Silane coupling agent (ii)]

Mercapto-based silane coupling agent (manufactured by Momentive, NXT Z 45)

[Zinc oxide]

Manufactured by Sakai Chemical Industry Co., Ltd., two kinds of zinc oxide

[Stearic acid]

Manufactured by NOF Corporation, stearic acid cherry

[Anti-aging agent]

Manufactured by Sumitomo Chemical Company, Limited, ANTIGEN 6C

[Process oil]

Manufactured by Japan Sun Oil Company, Ltd., SUNTHENE 410

[Vulcanization accelerator]

Manufactured by Sanshin Chemical Industry Co., Ltd., SANCELER CZ-G

[Sulfur (vulcanizing agent)]

Manufactured by Karuizawa smelter

[Examples 1-13 and Comparative Examples 1-9]

Each material described above was blended and kneaded in an amount shown in Table 1 and Table 2, thereby preparing vibration isolation rubber compositions. The materials were kneaded by, first, kneading the materials other than the vulcanizing agent and the vulcanization accelerator using a Banbury mixer at 140°C for 5 minutes, then, blending the vulcanizing agent and the vulcanization accelerator in, and kneading the materials using an open roll at 60°C for 5 minutes.

Each property was evaluated according to the following standards using the vibration isolation rubber compositions of the examples and the comparative examples obtained as described above. The results are collectively shown in Table 1 and Table 2.

<ΔG'>

From each vibration isolation rubber composition, the storage moduli at a frequency of 11 Hz and 40°C (storage modulus G1' at a deflection angle of 0.28% and storage modulus G'2 at a deflection angle of 42%) of a unvulcanized vibration isolation rubber composition were measured with RPA2000 (manufactured by Alpha Technology Co., Ltd.). In addition, ΔG' indicated by the following formula (I) was calculated based on the measurement results.

$$\Delta G' = G'1/G'2 \quad \ldots\ldots \quad (I)$$

<Reinforcement properties>

Each vibration isolation rubber composition was press-molded (vulcanized) under conditions of 150°C × 30 minutes, and the hardness (JIS-A hardness) of the rubber surface was measured with ASKER Durometer (P1-A type) (manufactured by Kobunshi Keiki Co., Ltd.). In addition, the reinforcement properties were evaluated according to the following standards.

O (very good): The hardness is 60% or more.
X (poor): The hardness is less than 60%.

<Durability>

Each vibration isolation rubber composition was press-molded (vulcanized) under conditions of 150°C × 30 minutes to produce a 2 mm-thick rubber sheet. In addition, a JIS No. 3 dumbbell was blanked from this rubber sheet, and an extension and contraction fatigue test was performed using this dumbbell according to JIS K 6260.

In addition, the number of times of extension and contraction at break was measured, and the durability was evaluated according to the following standards.

O (very good): The number of times of extension and contraction is 80,000 or more.
X (poor): The number of times of extension and contraction is less than 80,000.

<Insulation properties>

From a sample obtained by press-molding (vulcanizing) each vibration isolation rubber composition under conditions of 150°C × 30 minutes, the volume resistivity VR (Ω·cm) was measured according to JIS K 6271-1: 2015 (Rubber, vulcanized or thermoplastic-Determination of resistivity).

Specifically, the volume resistivity VR was obtained under the following conditions.

Measurement method: Guarded-electrode system
Cathode electrode: Outer diameter 80 mm, inner diameter 70 mm
Main electrode: 50 mm
Specimen external dimensions: 100 mm × 100 mm
Sample thickness: 2 mm
Applied voltage: 1 V
Detection current range: 200 pA to 20 mA

In addition, the insulation properties were evaluated according to the following standards.

O (very good): The volume resistivity VR is $1 \times 10^9$ Ω·cm or more.
X (poor): The volume resistivity VR is less than $1 \times 10^9$ Ω·cm.

<Spring deterioration>

On a vibration isolation rubber sample obtained by press-molding (vulcanizing) each vibration isolation rubber composition under conditions of 150°C × 30 minutes, an endurance fatigue test was performed by contracting the sample 4 mm in a compression direction and extending the sample 15 mm in a tensile direction repeatedly at a frequency of 3 Hz, and the loads when the sample was extended 15 mm in the tensile direction (an initial load F1 and a load F2 when the number of times of extension and contraction reached 3,000) were measured. In addition, the spring deterioration indicated by the following formula (II) was calculated based on the measurement results.

$$\text{Spring deterioration} = \{(F2 - F1)/F1\} \times 100\ (\%) \quad \ldots\ldots \quad (II)$$

In addition, the spring deterioration was evaluated according to the following standards.

O (very good): The spring deterioration is -20% or more.
X (poor): The spring deterioration is less than -20%.

**[Table 1]**

(Parts by mass)

| | Example | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| NR | 100 | 100 | 100 | 100 | 100 | 100 | 100 | 100 | 100 | 100 | 100 | 100 | 100 |
| Dihydrazide (i) | 3 | 3 | 3 | 0.75 | 1 | 5 | - | 3 | 3 | 3 | 3 | 3 | 3 |
| Dihydrazide (ii) | - | - | - | - | - | - | 3 | - | - | - | - | - | - |
| Carbon black (i) | 30 | - | - | 30 | 30 | 30 | 30 | 10 | 40 | 30 | 30 | 30 | 30 |
| Carbon black (ii) | - | 30 | - | - | - | - | - | - | - | - | - | - | - |
| Carbon black (iii) | - | - | 30 | - | - | - | - | - | - | - | - | - | - |
| Carbon black (iv) | - | - | - | - | - | - | - | - | - | - | - | - | - |

(continued)

| (Parts by mass) | | | | | | | | | | | | | |
|---|---|---|---|---|---|---|---|---|---|---|---|---|---|
| | Example | | | | | | | | | | | | |
| | 1 | 2 | 3 | 4 | 5 | 6 | 7 | 8 | 9 | 10 | 11 | 12 | 13 |
| Carbon black (v) | - | - | - | - | - | - | - | - | - | - | - | - | - |
| Carbon black (vi) | - | - | - | - | - | - | - | - | - | - | - | - | - |
| Silica | 25 | 25 | 25 | 25 | 25 | 25 | 25 | 25 | 25 | 10 | 30 | 30 | 30 |
| Silane coupling agent (i) | 1 | 1 | 1 | 1 | 1 | 1 | 1 | 1 | 1 | 1 | 1 | - | - |
| Silane coupling agent (ii) | - | - | - | - | - | - | - | - | - | - | - | 1 | - |
| Zinc oxide | 5 | 5 | 5 | 5 | 5 | 5 | 5 | 5 | 5 | 5 | 5 | 5 | 5 |
| Stearic acid | 2 | 2 | 2 | 2 | 2 | 2 | 2 | 2 | 2 | 2 | 2 | 2 | 2 |
| Anti-aging agent | 1 | 1 | 1 | 1 | 1 | 1 | 1 | 1 | 1 | 1 | 1 | 1 | 1 |
| Process oil | 3 | 3 | 3 | 3 | 3 | 3 | 3 | 3 | 3 | 3 | 3 | 3 | 3 |
| Vulcanization accelerator | 1 | 1 | 1 | 1 | 1 | 1 | 1 | 1 | 1 | 1 | 1 | 1 | 1 |
| Sulfur | 2.5 | 2.5 | 2.5 | 2.5 | 2.5 | 2.5 | 2.5 | 2.5 | 2.5 | 2.5 | 2.5 | 2.5 | 2.5 |
| $\Delta G'$ | 4.5 | 4.8 | 4.1 | 4.9 | 4.8 | 4.2 | 4.4 | 4.2 | 4.9 | 4.0 | 4.7 | 4.7 | 5.0 |
| Reinforcement properties (JIS-A) | 68 | 68 | 68 | 68 | 68 | 68 | 68 | 60 | 78 | 60 | 71 | 71 | 71 |
| Evaluation | O | O | O | O | O | O | O | O | O | O | O | O | O |
| Durability (ten thousand times) | 13 | 15 | 9 | 11 | 11 | 9 | 14 | 9 | 8 | 9 | 12 | 12 | 8 |
| Evaluation | O | O | O | O | O | O | O | O | O | O | O | O | O |
| Insulation properties ($\Omega \cdot cm$) | $10^{13}$ | $10^{12}$ | $10^{14}$ | $10^{10}$ | $10^{10}$ | $10^{14}$ | $10^{13}$ | $10^{14}$ | $10^{9}$ | $10^{12}$ | $10^{13}$ | $10^{13}$ | $10^{13}$ |
| Evaluation | O | O | O | O | O | O | O | O | O | O | O | O | O |
| Spring deterioration (%) | -15 | -19 | -13 | -19 | -18 | -14 | -14 | -13 | -20 | -13 | -16 | -17 | -19 |
| Evaluation | O | O | O | O | O | O | O | O | O | O | O | O | O |

[Table 2]

| (Parts by mass) | | | | | | | | | |
|---|---|---|---|---|---|---|---|---|---|
| | Comparative Example | | | | | | | | |
| | 1 | 2 | 3 | 4 | 5 | 6 | 7 | 8 | 9 |
| NR | 100 | 100 | 100 | 100 | 100 | 100 | 100 | 100 | 100 |
| Dihydrazide (i) | 0.05 | 7 | 3 | 3 | 3 | 3 | 3 | 3 | 3 |
| Dihydrazide (ii) | - | - | - | - | - | - | - | - | - |
| Carbon black (i) | 30 | 30 | 7 | 45 | - | - | 30 | 30 | - |
| Carbon black (ii) | - | - | - | - | - | - | - | - | - |

(continued)

| (Parts by mass) | | | | | | | | | |
|---|---|---|---|---|---|---|---|---|---|
| | Comparative Example | | | | | | | | |
| | 1 | 2 | 3 | 4 | 5 | 6 | 7 | 8 | 9 |
| Carbon black (iii) | - | - | - | - | - | - | - | - | - |
| Carbon black (iv) | - | - | - | - | 30 | - | - | - | - |
| Carbon black (v) | - | - | - | - | - | 30 | - | - | - |
| Carbon black (vi) | - | - | - | - | - | - | - | - | 30 |
| Silica | 25 | 25 | 25 | 25 | 25 | 25 | 7 | 35 | 25 |
| Silane coupling agent (i) | 1 | 1 | 1 | 1 | 1 | 1 | 1 | 1 | 1 |
| Silane coupling agent (ii) | - | - | - | - | - | - | - | - | - |
| Zinc oxide | 5 | 5 | 5 | 5 | 5 | 5 | 5 | 5 | 5 |
| Stearic acid | 2 | 2 | 2 | 2 | 2 | 2 | 2 | 2 | 2 |
| Anti-aging agent | 1 | 1 | 1 | 1 | 1 | 1 | 1 | 1 | 1 |
| Process oil | 3 | 3 | 3 | 3 | 3 | 3 | 3 | 3 | 3 |
| Vulcanization accelerator | 1 | 1 | 1 | 1 | 1 | 1 | 1 | 1 | 1 |
| Sulfur | 2.5 | 2.5 | 2.5 | 2.5 | 2.5 | 2.5 | 2.5 | 2.5 | 2.5 |
| ΔG' | 5.1 | 3.9 | 4.2 | 5.1 | 5.1 | 4.2 | 3.8 | 4.7 | 4.9 |
| Reinforcement properties (JIS-A) | 68 | 68 | 55 | 76 | 68 | 63 | 58 | 73 | 68 |
| Evaluation | O | O | X | O | O | O | X | O | O |
| Durability (ten thousand times) | 10 | 7 | 15 | 8 | 7 | 6 | 12 | 11 | 15 |
| Evaluation | O | X | O | O | X | X | O | O | O |
| Insulation properties (Ω·cm) | $10^8$ | $10^{14}$ | $10^{14}$ | $10^7$ | $10^6$ | $10^{14}$ | $10^{10}$ | $10^{13}$ | $10^8$ |
| Evaluation | X | O | O | X | X | O | O | O | X |
| Spring deterioration (%) | -21 | -11 | -13 | -18 | -21 | -12 | -14 | -22 | -20 |
| Evaluation | X | O | O | O | X | O | O | X | O |

From the results of Table 1 and Table 2 below, the vulcanized bodies of the vibration isolation rubber compositions of the examples were found out to exhibit properties required for the present invention in terms of all of durability (high durability), spring deterioration (low spring deterioration), and insulation properties.

In contrast, in the vibration isolation rubber composition of Comparative Example 1, the content of the dihydrazide compound was too small, the dispersion of carbon black was not sufficient, and thus it was found out that a conduction path was formed and the insulation properties were poor. In addition, the dispersibility of carbon black or silica became insufficient, clumps were generated, the clumps were crumbled during endurance excitation to cause a loss in load, and thus the spring deterioration was found out to be poor.

In the vibration isolation rubber composition of Comparative Example 2, the content of the dihydrazide compound was too large, the viscosity of the rubber significantly increased, and thus the durability was found out to be poor.

In the vibration isolation rubber composition of Comparative Example 3, the content of the carbon black was too small, and the reinforcement properties (hardness) were found out to be poor.

In the vibration isolation rubber composition of Comparative Example 4, the content of the carbon black was too large, and it was found out that the formation of a conduction path made the insulation properties be poor.

In the vibration isolation rubber composition of Comparative Example 5, the BET specific surface area of the carbon black exhibited a value above the regulation of the present invention, and the conductivity increased with an increase in the surface area, and thus the insulation properties were found out to be poor.

In the vibration isolation rubber composition of Comparative Example 6, the BET specific surface area of the carbon black exhibited a value below the regulation of the present invention, and the interface between the rubber and the carbon black was likely to act as a crack generation starting point during endurance excitation, and thus the durability was

found out to be poor.

In the vibration isolation rubber composition of Comparative Example 7, the content of the silica was too small, and the reinforcement properties (hardness) were found out to be poor.

In the vibration isolation rubber composition of Comparative Example 8, the content of the silica was too large, and the clumps of the silica collapsed during endurance excitation to cause a loss in load, and thus the spring deterioration was found out to be poor.

In the vibration isolation rubber composition of Comparative Example 9, the BET specific surface area of the carbon black exhibited a value above the regulation of the present invention, and the conductivity increased with an increase in the surface area, and thus the insulation properties were found out to be poor.

In the examples, specific forms in the present invention have been shown, but the examples are simply examples and shall not be interpreted to limit the present invention.

[Industrial Applicability]

The vibration isolation rubber member composed of the vulcanized body of the present vibration isolation rubber composition enables all of high durability, low spring deterioration, and insulation properties to be satisfied at a high level and is thus capable of exhibiting excellent performance particularly as a material of vibration isolation rubber for railroad vehicles.

In addition, the vibration isolation rubber member can also be used as configuration members such as engine mounts, stabilizer bushes, suspension bushes, motor mounts, subframe mounts, and the like that are used for the vehicles of automobiles or the like aside from the above-described application. Particularly, due to the high insulation properties or the like, the vibration isolation rubber member can also be advantageously used in the applications of configuration members (vibration isolation rubber members for electric vehicles) such as motor mounts, suspension bushes, and subframe mounts for electric vehicles including an electric motor as a power source (not only electric vehicles (EVs) but also fuel cell vehicles (FCVs), plug-in hybrid vehicles (PHVs), hybrid vehicles (HVs), and the like).

In addition, due to the high insulation properties or the like, the vibration isolation rubber member can also be used in the applications of vibration control apparatuses and seismic isolation apparatuses such as vibration control dampers for computer hard disks, vibration control dampers for general household appliances such as washing machines, vibration control walls for buildings in the construction and housing field, and vibration control dampers.

## Claims

**1.** A vibration isolation rubber composition, comprising:

a polymer component composed of the following component (A); and
the following components (B)-(D),
wherein amounts of the component (B), the component (C), and the component (D) are 0.1-5 parts by mass, 10-40 parts by mass, and 10-30 parts by mass, respectively, per 100 parts by mass of the component (A), and the component (C) has a BET specific surface area of 18-40 $m^2/g$,

(A) a diene-based rubber,
(B) a dihydrazide compound,
(C) carbon black, and
(D) silica.

**2.** The vibration isolation rubber composition according to Claim 1, further comprising:
a silane coupling agent (E).

**3.** The vibration isolation rubber composition according to Claim 2,
wherein the silane coupling agent (E) is at least one selected from the group consisting of a mercapto-based silane coupling agent and a sulfide-based silane coupling agent.

**4.** The vibration isolation rubber composition according to any one of Claims 1 to 3,
wherein the dihydrazide compound (B) is at least one selected from adipic acid dihydrazide and isophthalic dihydrazide.

**5.** A vibration isolation rubber member, composed of a vulcanized body of the vibration isolation rubber composition

according to any one of Claims 1 to 4.

6. The vibration isolation rubber member according to Claim 5, wherein the vibration isolation rubber member is a vibration isolation rubber member for a railroad vehicle.

## Patentansprüche

1. Schwingungsisolierende Kautschukzusammensetzung, umfassend:

   eine Polymerkomponente, die aus der folgenden Komponente (A) zusammengesetzt ist; und die folgenden Komponenten (B)-(D), wobei Mengen der Komponente (B), der Komponente (C), und der Komponente (D) 0,1-5 Massenanteile, 10-40 Massenanteile, beziehungsweise 10-30 Massenanteile pro 100 Massenanteile der Komponente (A) sind, und die Komponente (C) einen BETspezifischen Oberflächenbereich von 18-40 $m^2/g$ aufweist,

   (A) einen Dien-basierten Kautschuk,
   (B) eine Dihydrazidverbindung,
   (C) Ruß, und
   (D) Siliciumdioxid.

2. Schwingungsisolierende Kautschukzusammensetzung nach Anspruch 1, weiter umfassend: ein Silan-Kupplungsmittel (E).

3. Schwingungsisolierende Kautschukzusammensetzung nach Anspruch 2, wobei das Silan-Kupplungsmittel (E) mindestens eines ist, ausgewählt aus der Gruppe, bestehend aus einem Mercapto-basierten Silan-Kupplungsmittel und einem Sulfid-basierten Silan-Kupplungsmittel.

4. Schwingungsisolierende Kautschukzusammensetzung nach einem der Ansprüche 1 bis 3, wobei die Dihydrazidverbindung (B) mindestens eine ist, ausgewählt aus Adipinsäuredihydrazid und Isophthalsäuredihydrazid.

5. Schwingungsisolierendes Kautschukelement, zusammengesetzt aus einem vulkanisierten Körper der schwingungsisolierenden Kautschukzusammensetzung nach einem der Ansprüche 1 bis 4.

6. Schwingungsisolierendes Kautschukelement nach Anspruch 5, wobei das schwingungsisolierende Kautschukelement ein schwingungsisolierendes Kautschukelement für ein Eisenbahnfahrzeug ist.

## Revendications

1. Composition de caoutchouc pour isolation de vibration, comprenant :

   un composant polymère composé du composant (A) suivant ; et les composants (B) à (D) suivants, dans laquelle des quantités du composant (B), du composant (C) et du composant (D) sont de 0,1 à 5 parties en masse, 10 à 40 parties en masse et 10 à 30 parties en masse, respectivement, pour 100 parties en masse du composant (A), et le composant (C) a une surface spécifique BET de 18 à 40 $m^2/g$,

   (A) un caoutchouc à base de diène,
   (B) un composé d'hydrazide,
   (C) du noir de carbone, et
   (D) de la silice.

2. Composition de caoutchouc pour isolation de vibration selon la revendication 1, comprenant en outre: un agent adhésif au silane (E).

3. Composition de caoutchouc pour isolation de vibration selon la revendication 2, dans laquelle l'agent adhésif au silane (E) est au moins un sélectionné parmi le groupe constitué d'un agent adhésif au

silane à base de mercapto et d'un agent adhésif au silane à base de sulfure.

**4.** Composition de caoutchouc pour isolation de vibration selon l'une quelconque des revendications 1 à 3, dans laquelle le composé de dihydrazide (B) est au moins un sélectionné parmi le dihydrazide d'acide adipique et le dihydrazide isophtalique.

**5.** Élément de caoutchouc pour isolation de vibration, composé d'un corps vulcanisé de la composition de caoutchouc pour isolation de vibration selon l'une quelconque des revendications 1 à 4.

**6.** Élément de caoutchouc pour isolation de vibration selon la revendication 5, dans lequel l'élément de caoutchouc pour isolation de vibration est un élément de caoutchouc pour isolation de vibration pour un véhicule ferroviaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020164634 A
- WO 2020066550 A1
- JP 2017119873 A
- JP 2015224279 A
- JP 2018095810 A
- JP 2016124880 A
- JP 6657491 B
- WO 2015182349 A
- JP 2006047070 A